# EUROPÄISCHE PATENTANMELDUNG

(11) **EP 2 492 646 A2**
(43) Veröffentlichungstag der Anmeldung: **29.08.2012**
(21) Anmeldenummer: 12156910.7
(22) Anmeldetag: 24.02.2012
(51) Int. Cl.: G01D 5/20

(54) **Energieautarke Einrichtung und Verfahren zur Positionsdetektion**

(30) Priorität: 24.02.2011 DE 102011012296
(71) Anmelder: EnOcean GmbH, 82041 Oberhaching (DE)
(72) Erfinder: Eggert, Holger Alfons, 82166 Gräfelfing (DE); Klausnitzer, Sven, 82008 Unterhaching (DE)
(74) Vertreter: Epping - Hermann - Fischer

(57) **Zusammenfassung**

Energieautarke Einrichtung mit einem Energiewandler, der zumindest
ein erstes permanentmagnetisches Element,
ein zweites permanentmagnetisches Element und einer Spule aufweist, wobei
zumindest eines der permanentmagnetischen Elemente derart angeordnet ist, dass dessen Magnetfeld die Spule durchdringt und das zweite permanentmagnetische Element derart bewegbar angeordnet ist, dass, mittels der Bewegung, das die Spule durchdringende Magnetfeld veränderbar ist.

## Beschreibung

Die Erfindung betrifft eine energieautarke Einrichtung mit einem elektromagnetischen Energiewandler sowie ein Verfahren zur Positionsdetektion gemäß den nebengeordneten Patentansprüchen.

Um die tatsächliche Position bzw. die Stellung einer beweglichen Einrichtung gegenüber einer Bezugsposition, wie z. B. einer Tür, einer Klappe oder eines Fensters, zu überwachen, verwenden bisher bekannte Systeme beispielsweise mittels Solarzelle versorgte Funksensoren, die die benötigte Energie aus einer Solarzelle oder einer Batterie beziehen. Entsprechend ist für den zuverlässigen Betrieb eine Mindesthelligkeit erforderlich, bei Anwendung in Dunkelräumen ist ein solches System ungeeignet.

Batteriebetriebene Systeme haben den Nachteil inhärent, dass sie nur solange funktionieren wie die Batterie eine Mindestspannung für die Messeinrichtung bereitstellen kann und somit der Wartung, d. h. des regelmäßigen Batterietauschs, bedürfen.

Es ist Aufgabe der vorliegenden Erfindung einen Energiewandler und ein Verfahren zur Positionsbestimmung anzugeben, welche zumindest die zuvor aufgeführten Nachteile vermeiden und eine zuverlässige Positionsdetektion ermöglichen.

Diese Aufgabe wird unter anderem durch den Energiewandler mit den Merkmalen des Anspruchs 1 und einem Verfahren zur Positionsdetektion gemäß Anspruch 7 gelöst.

Vorteilhafte Weiterbildungen des Energiewandlers und des Verfahrens zur Positionsdetektion sind Gegenstand der abhängigen Ansprüche.

Dadurch, dass ein Energiewandler in der energieautarken Einrichtung vorgesehen ist, der ein erstes permanentmagnetisches Element, ein zweites permanentmagnetisches Element und eine Spule aufweist, wobei zumindest eines der permanentmagnetischen Elemente derart angeordnet ist, dass dessen Magnetfeld die Spule durchdringt und das zweite permanentmagnetische Element derart bewegbar ist, dass, mittels der Bewegung, das, die Spule durchdringende, Magnetfeld veränderbar ist, ist sowohl elektrische Energie für die Positionserfassung als auch für die Übertragung des Funkimpulses bereitgestellt.

In einer Weiterbildung weist der Energiewandler zusätzliche ferromagnetische Elemente, zur Führung und Konzentration zumindest eines der Magnetfelder, auf, wodurch eine Verbesserung des Wirkungsgrades erzielbar ist.

Das zweite permanentmagnetische Element ist aus mehreren einzelnen permanentmagnetischen Elementen aufgebaut, die miteinander verbunden sind, wobei die Verbindung dabei beispielsweise über ein ferromagnetisches Zwischenstück erfolgen kann.

In einer Weiterbildung weist die energieautarke Einrichtung zusätzlich einen Funksender auf, der dazu geeignet ist durch, im Energiewandler erzeugte, Spannungspulse betrieben zu werden und nach der Aktivierung ein Telegramm auszusenden. Ist der Sender derart ausgebildet, dass die Art des ausgesendeten Telegramms von der Polarität des im Energiewandler erzeugten Spannungspulses abhängt, kann mit hoher Effizienz beispielsweise eine Bewegungsrichtung detektiert und das Ergebnis übermittelt werden.

Weist die energieautarke Einrichtung zumindest einen zusätzlichen Sensor auf, der durch den, im Energiewandler erzeugten, Spannungspuls betrieben wird, sind dessen Messwerte ebenfalls in dem durch den Funksender ausgesendeten Telegramm übertragbar.

Mit einer solchen Vorrichtung ist es möglich, ein Verfahren zur Positionsdetektion durchzuführen, welches in einer Ausführungsform dadurch gekennzeichnet ist, dass das erste permanentmagnetische Element und das zweite permanentmagnetische Element derart zueinander bewegt werden, dass durch die Bewegung des zweiten permanentmagnetischen Elements ein Spannungspuls induziert wird.

Weist der Energiewandler weiterhin einen Funksender auf, so kann dieser mit dem induzierten Spannungspuls betrieben werden. Nach einer Aktivierung des Funksenders durch den Spannungspuls wird ein Telegramm ausgesendet.

Dabei ist es von Vorteil, wenn die Art des Telegramms von der Polarität des Spannungspulses abhängt, so dass die Positionsbestimmung der überwachten Einrichtung bzw. des überwachten Gegenstands ermöglicht wird.

In einer besonders vorteilhaften Ausführung des erfindungsgemäßen Verfahrens versorgt der induzierte Spannungspuls mindestens einen zusätzlichen Sensor mit elektrischer Energie, wobei zumindest ein Messwert des zumindest einen Sensors durch das Telegramm des Funksenders ebenfalls ausgesendet wird.

Eine solche Vorrichtung kann zur Positionsdetektion von z. B. Türen, Klappen, Fenstern, und im Allgemeinen von beweglichen Gegenständen und Einrichtungen verwendet werden. Eine solche Vorrichtung eignet sich somit auch für den Einsatz in der Gebäudeautomatisierung.

Es ist auch denkbar, eine solche Vorrichtung zur Diebstahlsicherung von Objekten oder Positionsüberwachung von Gegenständen zu verwenden. Auch ist eine Bewegungsüberwachung z. B. bei einer Förderung oder die Überwachung eines Produktionsablaufs denkbar.

Die erfindungsgemäße Vorrichtung und das erfindungsgemäße Verfahren ermöglichen somit eine berührungslose Positionsdetektion von beweglichen Einrichtungen bzw. Gegenständen. Ebenso ermöglichen sie berührungslose Stromversorgung von z. B. Sensoren oder Sendern. Eine solche Vorrichtung ist somit zur sicheren Positionsdetektion beweglicher Einrichtungen/Gegenstände bzw. sicheren Stromversorgung von Detektionssystemen geeignet, da es keinerlei Wartung bedarf und zudem an allen Orten einsetzbar ist, da es unabhängig von äußeren Bedingungen eine zuverlässige Energieversorgung gewährleistet.

Nachfolgend werden Ausführungsbeispiele der erfindungsgemäßen Vorrichtung und des erfindungsgemäßen Verfahrens anhand der Figuren erläutert. Dabei sind gleiche bzw. gleichwirkende Elemente mit gleichen Bezugszeichen versehen.

Es zeigen:
Figuren 1 und 2 ein schematisches Ausführungsbeispiel des erfindungsgemäßen Verfahrens,
Fig. 3 ein schematisches Ausführungsbeispiel einer vorteilhaften Weiterbildung eines ersten permanentmagnetischen Elements der erfindungsgemäßen Vorrichtung,
Fig. 4 ein schematisches Ausführungsbeispiel einer vorteilhaften Weiterbildung eines zweiten permanentmagnetischen Elements der erfindungsgemäßen Vorrichtung und
Figuren 5 bis 7 ein schematisches Ausführungsbeispiel der erfindungsgemäßen Vorrichtung und des erfindungsgemäßen Verfahren zur Detektion einer Türstellung.

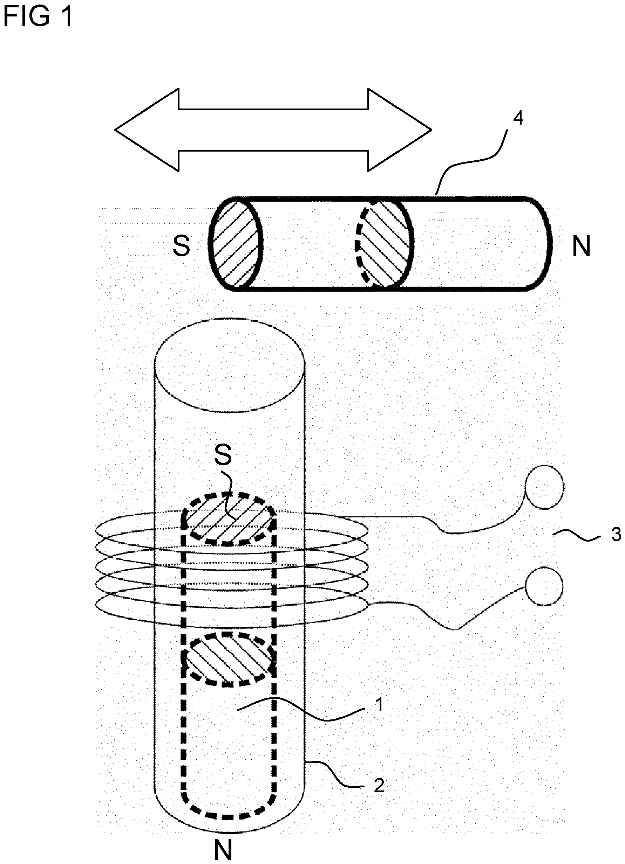

Fig. 1 zeigt einen ersten Zustand eines Ausführungsbeispiels des eingesetzten Energiewandlers. Ein erstes permanentmagnetisches Element (4) und ein zweites permanentmagnetisches Element (1) sind zueinander bewegbar angeordnet. Die Bewegbarkeit zueinander wird durch den Pfeil über dem ersten permanentmagnetischen Element (4) angedeutet, der anzeigt, dass das erste permanentmagnetische Element (4) sich nur entlang der Horizontalen von links nach rechts und umgekehrt bewegen kann.

Das zweite permanentmagnetische Element (1) befindet sich in einer Hülse (2) und kann sich darin auf und ab bewegen. Um die Hülse (2) ist eine Spule (3) angebracht, durch die sich das zweite permanentmagnetische Element (1) bewegen kann. Vorteilhaft ist es, wenn die Hülse gleitfähig, insbesondere selbstschmierend, beispielsweise aus Teflon, ausgebildet ist.

Der magnetische Nordpol (N) des zweiten permanentmagnetischen Elements (1) sei wie in Fig. 1 angedeutet auf der unteren Hälfte des, beispielhaft zylinderförmigen, zweiten permanentmagnetischen Elements (1) ausgebildet, während der magnetische Südpol (S) auf der oberen Hälfte ausgebildet sei.

Der magnetische Südpol (S) des ersten permanentmagnetischen Elements (4) erstrecke sich über die linke Hälfte, des beispielhaft zylinderförmigen, ersten permanentmagnetischen Elements (4) und der magnetische Nordpol (N) über die rechte Hälfte.

In einer ersten Stellung, wie in Fig. 1 angedeutet, befindet sich der magnetische Südpol (S) des ersten permanentmagnetischen Elements (4) senkrecht über dem magnetischen Südpol (S) des zweiten permanentmagnetischen Elements (1). Aufgrund der magnetischen Abstoßung zwischen magnetischen Elementen gleicher Polarität entfernt sich das zweite permanentmagnetische Element (1) maximal vom ersten permanentmagnetischen Element (4), d. h. das zweite permanentmagnetische Element bewegt sich innerhalb der Hülse soweit hinab, bis es an der unteren Begrenzung der Hülse anstößt.

Während dieser ersten Stellung umschließt die Spule (3) dauernd den magnetischen Südpol (S) des zweiten permanentmagnetischen Elements (1).

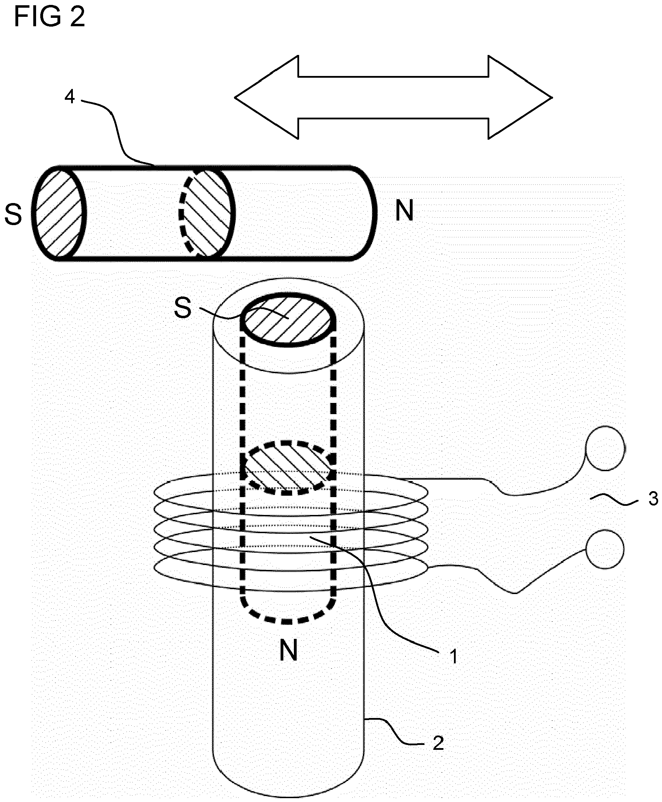

Wird nun, wie in Fig. 2 angedeutet, das erste permanentmagnetische Element (4) entlang der Horizontalen weiter nach links bewegt, befindet sich nun nicht mehr der magnetische Südpol (S) des ersten permanentmagnetischen Elements senkrecht über dem zweiten permanentmagnetischen Element (1), sondern der magnetische Nordpol (N) des ersten permanentmagnetischen Elements (4). Es stehen sich somit permanentmagnetische Elemente entgegengesetzter Polarität gegenüber.

Gemäß den Gesetzmäßigkeiten des Magnetismus ziehen sich magnetische Elemente entgegengesetzter Polarität an, d. h. das zweite permanentmagnetische Element (1) bewegt sich nun innerhalb der Hülse (2) auf das erste permanentmagnetische Element (4) zu bis es die obere Begrenzung der Hülse (2) erreicht. Die Hülse (2) ist dabei derart ausgebildet, dass sie mindestens die 1,5-fache Länge des zweiten permanentmagnetischen Elements (1) besitzt. Dadurch wird gewährleistet, dass die Spule (3) nach der Bewegung des zweiten permanentmagnetischen Elements (1), von einer unteren in eine obere Position oder umgekehrt, den jeweils anderen Pol des zweiten permanentmagnetischen Elements (1) umschließt.

Das Umschließen der Spule (3) eines ersten magnetischen Pols des zweiten permanentmagnetischen Elements (1) erzeugt einen ersten magnetischen Fluss durch die von der Spule (3) umschlossene Fläche. Der Übergang von einem ersten magnetischen Pol zum entgegengesetzten Pol ändert den magnetischen Fluss durch die von der Spule (3) umschlossene Fläche. Gemäß des Faraday'schen Induktionsgesetzes ist eine Änderung des magnetischen Fluss durch die von einer Spule umschlossene Fläche mit der Induktion eines Spannungspulses verknüpft. Abhängig von der Bewegungsrichtung des zweiten permanentmagnetischen Elements (1) werden in der Spule (3) jeweils Spannungspulse entgegengesetzter Polarität erzeugt. Diese können, wie bei den nachfolgend beschriebenen Weiterbildungen, zur Detektion der Position von beweglichen Einrichtungen und Gegenständen verwendet werden.

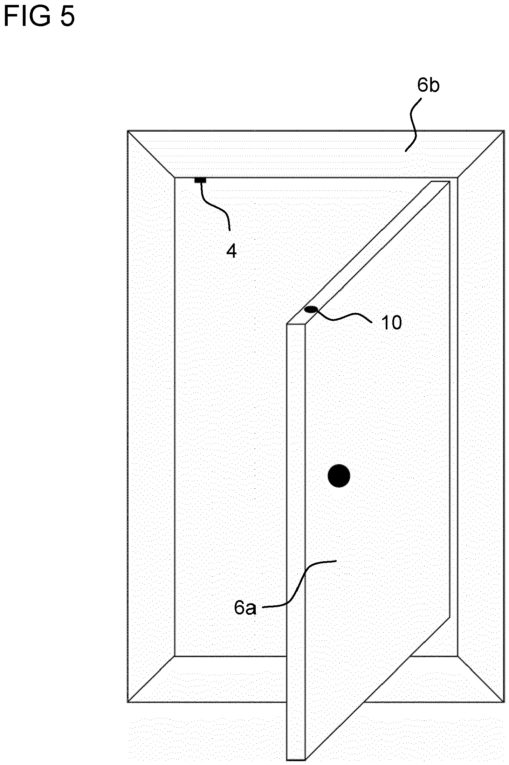

Die Vorrichtung als auch das in den Figuren 1 und 2 beschriebene Verfahren eignen sich somit zur Wandlung magnetischer Feldenergie in elektrische Energie. Wie später unter Bezugnahme auf die Figuren 5 bis 7 beschrieben, eignet sich die Vorrichtung für die Überwachung der Position von beweglichen Einrichtungen bzw. Gegenständen.

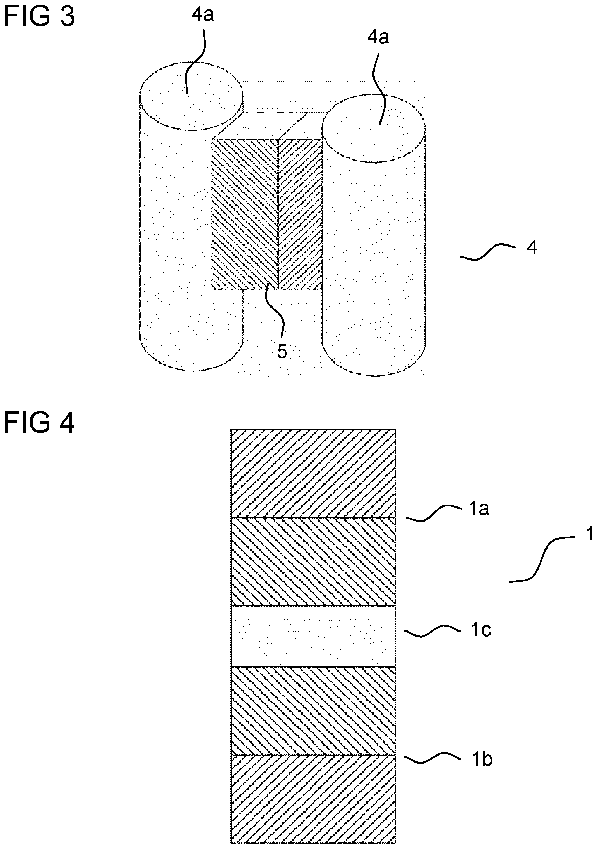

In Fig. 3 ist eine Weiterbildung eines ersten permanentmagnetischen Elements (4) gezeigt, dass aus einem Permanentmagneten (4a) und daran befestigten ferromagnetischen Elementen (5) besteht. Die am Permanentmagnets (4a) befestigten Elemente (5) nehmen dabei jeweils die magnetische Polarität desjenigen Pols des Permanentmagnets (4a) an, an welchem sie jeweils befestigt sind (magnetische Polarität durch entsprechende Schraffur der Fläche angedeutet). Somit ist es möglich, die Form des Magnetfelds und die lokale Intensität/Dichte der Magnetfeldlinien anzupassen bzw. einzustellen.

Fig. 4 zeigt eine vorteilhafte Weiterbildung eines zweiten permanentmagnetischen Elements (1), wobei das Element aus mehreren permanentmagnetischen Elementen (1a) und (1b) aufgebaut ist, welche mittels eines ferromagnetischen Zwischenstückes (1c) verbunden sind. Durch das ferromagnetische Zwischenstück (1c) lassen sich die permanentmagnetischen Elemente (1a) und (1b), trotz gleicher magnetischer Polarität der Verbindungsstellen, zweckmäßig und einfach verbinden, da sie sich wegen des ferromagnetischen Zwischenstücks (1c) anziehen und nicht gegenseitig abstoßen.

Bei einem solchen Aufbau ergibt sich von oben nach unten betrachtet ein Magnetwechsel von Nord- nach Südpol und anschließend invers von Süd- nach Nordpol. Bei einer Bewegung eines derart aufgebauten zweiten permanentmagnetischen Elements (1) von einer unteren Position, wie in Fig. 1 gezeigt, zu einer oberen Position, wie in Fig. 2 gezeigt, ergibt sich in der durch die Spule (3) umschlossenen Fläche ein zweifacher Wechsel des magnetischen Flusses und folglich werden in der Spule (3) nacheinander zwei entgegengesetzte Spannungspulse induziert, welche zur Energieversorgung beispielsweise eines Funksenders oder zusätzlicher Sensoren verwendet werden können.

Es sind auch zweite permanentmagnetische Elemente (1) denkbar, welche eine Vielzahl solcher Anordnungen permanentmagnetischer Elmente (1a) und (1b) vorsehen, um so die Anzahl an Änderungen der magnetischen Polarität entlang des zweiten permanentmagnetischen Elements (1) zu erhöhen.

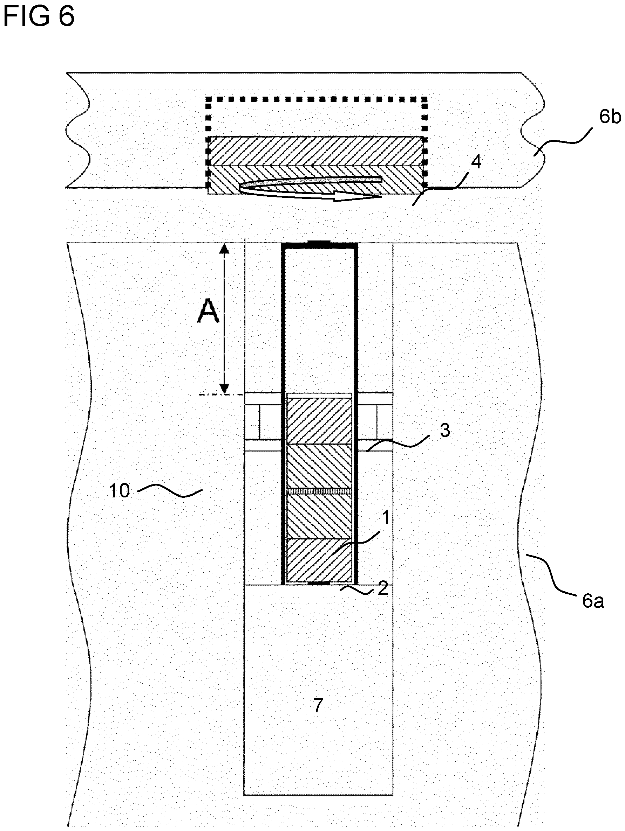

In den Figuren 5 und 6 ist eine konkrete Anwendung des erfindungsgemäßen Verfahrens gezeigt, die Überwachung des Öffnungszustands einer Tür.

Fig. 5 zeigt die räumliche Anordnung der einzelnen Komponenten. Das erste permanentmagnetische Element (4) wird im Türrahmen (6b) angeordnet, während der übrige Teil der Vorrichtung (10) innerhalb des Türblatts (6a) angeordnet ist. Um auch geringe Änderungen der Türposition detektieren zu können, ist es sehr vorteilhaft, die Komponenten in möglichst großer Entfernung von der Drehachse des Türblatts (6a) vorzusehen. Im konkreten Ausführungsbeispiel sind deshalb die Komponenten möglichst links angeordnet, um eine größtmögliche Distanz zur rechts angeordneten Drehachse zu erzielen.

Fig. 6 zeigt eine vergrößerte schematische Darstellung der, in Fig. 5 gezeigten, Vorrichtung zur Überwachung des Öffnungszustands einer Tür.

Im Türrahmen (6b) ist ein erstes permanentmagnetisches Element (4) angeordnet, wobei das erste permanentmagnetische Element (4) derart angeordnet ist, dass sein Abstand zur Tür (6a) und somit auch zum übrigen Teil der Vorrichtung (10) eingestellt werden kann. Hierzu kann beispielweise der Türrahmen (6b) ebenso wie das erste permanentmagnetische Element (4) mit einem Gewinde versehen werden, um dadurch eine Abstandsanpassung mittels hoch- bzw. runterschrauben des Elements (4) im Gewinde des Türrahmens (6b) durchzuführen.

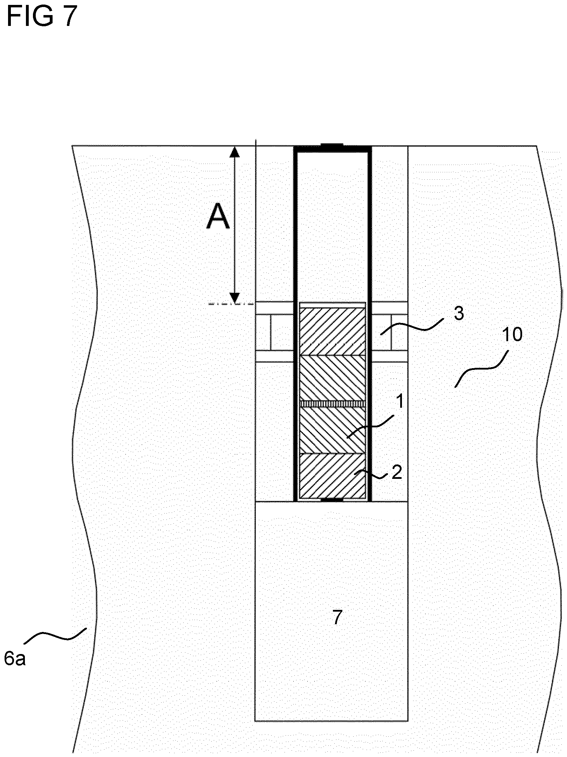

Im Türblatt (6a) ist der übrige Teil der Vorrichtung (10), welcher in Fig. 7 im Detail dargestellt ist, angeordnet. Eine Hülse (2) wird von einer Spule (3) umschlossen. Im Inneren der Hülse (2) ist ein zweites permanentmagnetisches Element (1) angeordnet, welches den in Fig. 4 beschriebenen Aufbau besitzt. Unterhalb der Hülse (2) kann im Türblatt (6a) weiterer Platz (7) ausgespart werden um zusätzliche elektronische Komponenten wie Sensoren oder Funksender vorzusehen.

Aufgrund der Schwerkraft befindet sich das zweite permanentmagnetische Element (1) in einer unteren Position innerhalb der Hülse (2) und die Spule (3) umschließt einen ersten magnetischen Pol des zweiten permanentmagnetischen Elements (1). Das zweite permanentmagnetische Element (1) kann um einen Hubweg (A) gehoben werden, so dass durch die Spule (3) zwei Spannungspulse erzeugt werden, das obere Ende des permanentmagnetischen Elements (1) an der oberen Begrenzung des Hülse (2) anstößt und das untere Ende des zweiten permanentmagnetischen Elements (1) von der Spule (3) umschlossen wird und diese somit wieder einen ersten magnetischen Pol des zweiten permanentmagnetischen Elements (1) umschließt.

Wird nun die geöffnete Tür geschlossen, d. h. das Türblatt (6a) wird auf den Türrahmen (6b) zu bewegt, so wird die übrige Vorrichtung (10) unter das erste permanentmagnetische Element (4) bewegt. Wenn das erste permanentmagnetische Element (4), wie in Fig. 5 dargestellt, als einfacher Permanentmagnet ausgeführt ist, dessen dem Türblatt zugewandte Pol entgegengesetzte magnetische Polarität besitzt als der oberste Pol des zweiten permanentmagnetischen Elements (1), so ziehen sich diese Pole mit abnehmendem Abstand von Türblatt (6a) und Türrahmen (6b) zunehmend an.

Sobald die Gewichtskraft, als auch Haft- und Gleitreibung an den Wänden der Hülse (2) durch die Anziehungskraft der Pole überwinden werden, beginnt das zweite permanentmagnetische Element (2) sich von der ersten, unteren Position hin zu einer zweiten, oberen Position zu bewegen. Je näher sich Türblatt (6a) und Türrahmen (6b) kommen, desto stärker ist Anziehungskraft und umso schneller bewegt sich das zweite permanentmagnetische Element in Richtung der zweiten, oberen Position.

Durch die Bewegung von der ersten, unteren Position zur zweiten, oberen Position des zweiten permanentmagnetischen Elements (1) werden durch Flussänderungen in der durch die Spule (3) umschlossenen Fläche zwei Spannungspulse induziert, die einem unterhalb der Hülse in der Tür angeordneten elektrischen Verbraucher, wie. z. B. ein Sensor oder ein Funksender, zugeführt werden können. Zu Detektion des Öffnungszustands genügt bereits ein zusätzlich angebrachter Sender, der in Abhängigkeit von der Polarität ein entsprechendes Telegramm aussendet.

Wird die Türe wieder geöffnet, d. h. das Türblatt (6a) wird vom Türrahmen (6b) wegbewegt, so nimmt die Anziehungskraft der unterschiedlichen magnetischen Pole mit zunehmender Entfernung ab und das zweite permanentmagnetische Element (1) wird von der Gewichtskraft von der zweiten, oberen Position zurück in die erste, untere Position bewegt. Dabei werden wiederum durch Änderungen des magnetischen Flusses durch die von der Spule (3) umschlossene Fläche Spannungspulse in der Spule (3) erzeugt, die zur Detektion des Öffnungszustands verwendet werden können.

In einer Weiterbildung des ersten permanentmagnetischen Elements (4) sind beide magnetischen Pole des Elements (4) dem Türblatt (6a) zugewandt. Beispielsweise könnte ein permanentmagnetisches Element (4), wie in Fig. 3 gezeigt, verwendet werden. Dabei wird das Element (4) so angeordnet, dass derjenige magnetische Pol, der die gleiche magnetische Polarität besitzt wie der oberste Pol des zweiten permanentmagnetischen Elements (1), zuerst vom zweiten permanentmagnetischen Element (1) passiert wird beim Schließen der Türe. Dies hat den Vorteil, dass das zweite permanentmagnetische Element auch dann noch in einer ersten, unteren Position verweilt wenn es sich dem ersten permanentmagnetischen Element (4) annähert, wegen der Abstoßung von Polen gleicher Polarität, und sich erst schlagartig in eine zweite, obere Position bewegt, wenn er sich unmittelbar unter dem entgegengesetzten magnetischen Pol des ersten permanentmagnetischen Element (4) befindet. Dies hat zur Folge, dass die Änderung des magnetischen Flusses in der von der Spule (3) umschlossenen Fläche sehr viel schneller geschieht und dadurch, gemäß Faraday'schem Induktionsgesetz, ein höherer Spannungspuls induziert wird und somit mehr elektrische Energie zur Verfügung steht.

Auch hier findet beim Öffnen der Tür wieder eine schlagartige Bewegung des zweiten permanentmagnetischen Elements (1) statt, wodurch wiederum ein hoher Spannungspuls zur Detektion des Öffnungszustands zur Verfügung steht.

Es ist anzumerken, dass die Positionierung des ersten permanentmagnetischen Elements (4) im Türrahmen (6b) und die Positionierung des übrigen Teils der Vorrichtung im Türblatt (6a) austauschbar sind.

Ebenso kann eine solche Vorrichtung auch liegend, z. B. in den Türseiten angebracht werden.

Zuvor sind Ausführungsbeispiele anhand einer Positionsbestimmung eines Türblatts oder Türflügels beschrieben. Es ist jedoch naheliegend, dass Anwendungen für jegliche Art beweglicher Verschlüsse von Öffnungen an und in Gebäuden und Fahrzeugen, aber auch für den Outdoor-Bereich, wie z. B. Viehgatter, Fallen, Schranken, Schleusentore, denkbar sind.

## Patentansprüche

1. Energieautarke Einrichtung mit einem Energiewandler, der zumindest
ein erstes permanentmagnetisches Element (4),
ein zweites permanentmagnetisches Element (1) und
eine Spule (3) aufweist, wobei
zumindest eines der permanentmagnetischen Elemente (1) derart angeordnet ist, dass dessen Magnetfeld die Spule (3) durchdringt und das zweite permanentmagnetische Element (1) derart bewegbar angeordnet ist, dass, mittels der Bewegung, das die Spule (3) durchdringende Magnetfeld veränderbar ist.

2. Energieautarke Einrichtung nach Anspruch 1, wobei zusätzliche ferromagnetische Elemente zur Führung zumindest eines der Magnetfelder vorgesehen sind.

3. Energieautarke Einrichtung nach einem der bisherigen Ansprüche, **dadurch gekennzeichnet, dass** das zweite permanentmagnetische Element aus mehreren einzelnen permanentmagnetischen Elementen besteht.

4. Energieautarke Einrichtung nach Anspruch 1 bis 3, **dadurch gekennzeichnet, dass** der Energiewandler mit einem Funksender verbunden ist.

5. Energieautarke Einrichtung nach einem der vorhergehenden Ansprüche, **dadurch gekennzeichnet, dass** die Anordnung zumindest einen zusätzlichen Sensoren aufweist.

6. Energieautarke Einrichtung nach Anspruch 5, **dadurch gekennzeichnet, dass** zumindest ein Sensor ein Positionssensor ist.

7. Verfahren zur Positionsdetektion mit einer energieautarken Einrichtung nach einem der Ansprüche 1 bis 6,
wobei das erste permanentmagnetische Element (4) und das zweite permanentmagnetische Element (1) derart zueinander bewegt werden, dass durch die Bewegung des zweiten permanentmagnetischen Elements (1) ein Spannungspuls in der Spule (3) erzeugt wird.

8. Verfahren nach Anspruch 7,
wobei der Spannungspuls den Funksender mit Energie versorgt, und wobei der Funksender nach einer Aktivierung ein Telegramm aussendet.

9. Verfahren nach Anspruch 8, **dadurch gekennzeichnet, dass** die Polarität des erzeugten Spannungspulses zur Bestimmung der Position verwendet wird.

10. Verfahren nach Anspruch 8 oder 9, **dadurch gekennzeichnet, dass** der erzeugte Spannungspuls zumindest einen Sensor mit elektrischer Energie versorgt und zumindest ein Messwert des zumindest einen Sensor durch den Funksender in dem Telegramm mit ausgesendet wird.
